Europäisches Patentamt

European Patent Office

Office européen des brevets

(19)

(11) Publication number: **0 494 154 B1**

(12) **EUROPEAN PATENT SPECIFICATION**

(45) Date of publication of patent specification: **13.09.95**

(21) Application number: **90912219.4**

(22) Date of filing: **27.07.90**

(86) International application number:
**PCT/DK90/00195**

(87) International publication number:
**WO 91/01784 (21.02.91 91/05)**

(51) Int. Cl.⁶: **B01D 3/08**, B01D 1/16,
B01D 47/16, B01D 53/24,
//B01D3/30

(54) **METHOD AND APPARATUS FOR SEPARATION PROCESSES.**

(30) Priority: **28.07.89 DK 3726/89**

(43) Date of publication of application:
**15.07.92 Bulletin 92/29**

(45) Publication of the grant of the patent:
**13.09.95 Bulletin 95/37**

(84) Designated Contracting States:
**BE DE FR GB NL SE**

(56) References cited:
EP-A- 0 267 531      DE-C- 2 717 505
DK-B- 138 413        US-A- 1 080 445
US-A- 1 803 792      US-A- 2 007 759
US-A- 2 578 355

Derwent's abstract No. 491 96 D/27,SU 772
561, publ. week 8127

(73) Proprietor: **JENSEN, Erik**
**Fraendevej 27**
**DK-2860 Soborg (DK)**

(72) Inventor: **JENSEN, Erik**
**Fraendevej 27**
**DK-2860 Soborg (DK)**

(74) Representative: **Vingtoft, Knud Erik et al**
**Plougmann & Vingtoft A/S,**
**Sankt Annae Plads 11,**
**P.O. Box 3007**
**DK-1021 Copenhagen K (DK)**

EP 0 494 154 B1

Rank Xerox (UK) Business Services
(3.10/3.09/3.3.3)

## Description

The present invention relates to an apparatus for separation of mixtures of gases, removal of impurities from a gaseous fluid or concentration of impurities in liquid. An apparatus of principally the same construction may be adapted to the following processes:

1. Stripping of more easily evaporable components from polluted mixtures of liquids by means of vapours from the more heavily evaporable component possibly produced by means of evaporation in the apparatus itself.

2. Concentration of dissolved or suspended compounds in a liquid by evaporation of part of the liquid.

3. Washing of impurities from air or a gas with a liquid, to which a neutralizing agent has been added.

4. Removal of organic solvents from air or gases by washing with a liquid, which can be mixed with the solvent.

5. Cooling a liquid by evaporation in contact with an air flow.

The present invention provides an apparatus for separating mixtures of liquid and/or gaseous fluids for concentration and/or removal of impurities in a gaseous or liquid fluid, said apparatus comprising an elongate and substantially horizontal chamber or tunnel having axially spaced fluid inlets and outlets, and a spraying system arranged within the chamber in the axial direction thereof for throwing the liquid against the inner walls of the chamber, or against the heating elements integrated in said walls, the liquid returning along the walls of the chamber for repeated spraying, and the apparatus according to the invention is characterized in that the spraying system comprises a rotor with collecting chambers having an aperture in the direction of rotation of the rotor, the collecting chambers comprising an outer wall, the angle of which with respect to a tangent of the periphery of the rotor is less than 30°, the rotor being arranged above and adjacent to a narrow slot defined between two baffles or guide plates arranged in a close relationship with the lower portion of the chamber to form two channels, through which the liquid is be directed at a high flow rate obtaining a turbulent flow to the spraying rotor via the narrow slot.

According to another aspect the present invention provides a method of operating an apparatus as described above, said method comprising passing a flow of gas through the chamber or tunnel, introducing a liquid through a liquid inlet at one end and removing liquid through a liquid outlet at the other end of the chamber, and rotating the rotor so as to bring the liquid effectively into contact with the gas several consecutive times by being sprayed against the walls of the chamber, liquid being returned to the rotor being directed to the slot below the rotor at a high flow rate obtaing a turbulent flow.

The liquid is introduced at one end of the tunnel, and the gas or vapour at the opposite end. Thereby, a stepwise countercurrent is obtained between the two phases, the liquid moving stepwise forward in the direction of the outlet for the liquid between the subsequent spraying steps during the flow through the feeding system.

Thereby an effective contact or exchange is obtained between the liquid and the gaseous phase.

According to the invention the system is particularly useful in connection with treatment of polluted liquids or gases, in which the highest possible concentration of impurities is to be obtained in the treated liquid or in the liquid used for washing the polluted gases.

For performing these processes a large variety of apparatuses exists, for example vertical rectification columns of traditional design with bottoms or baffles of different kinds, air washers with spraying nozzles and various types of evaporators (see i.e. US-A-1803792). The major disadvantage or drawback of the known types of apparatuses is that by treatment of heavily polluted liquids or gases a frequent cleaning is necessary, or expensive means for prevention of foaming have to be used in order to prevent that foam is transported with the flow of vapour and thereby polluting the destillate.

Some types of apparatuses which are capable of performing some of these processes exist, but a high price is a limiting factor.

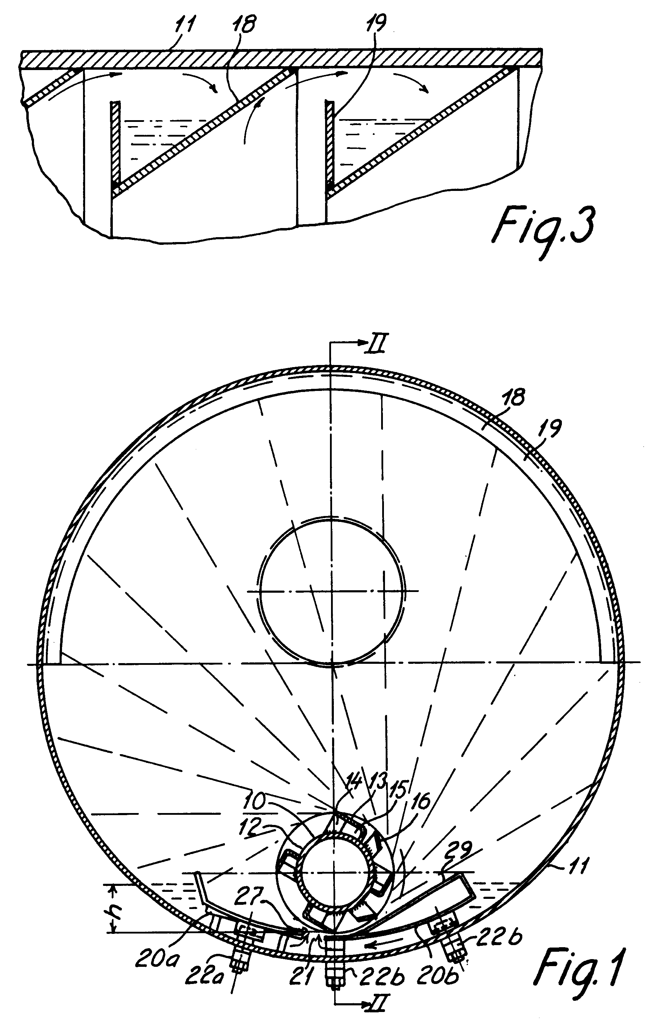

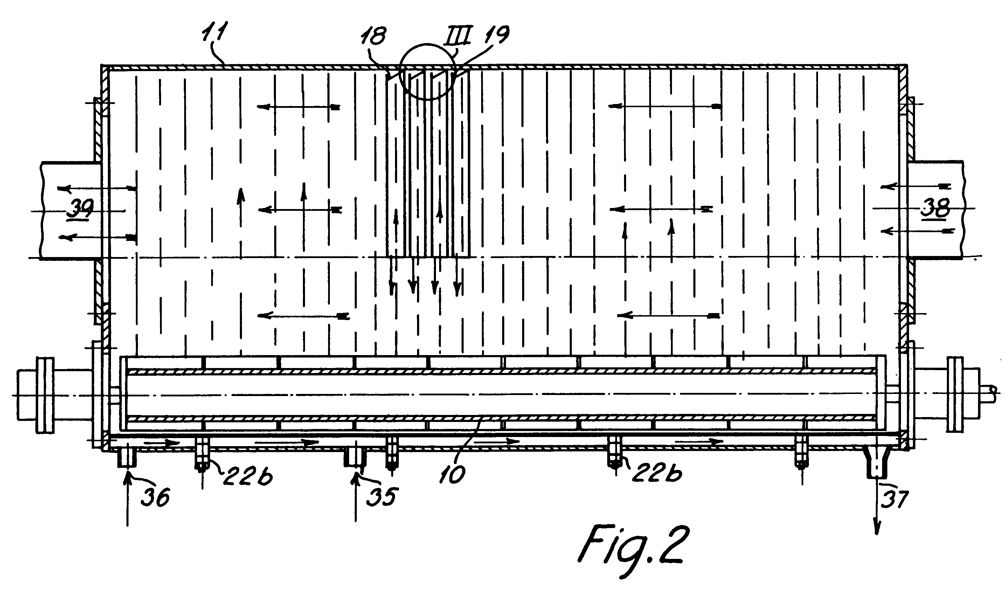

The preferred embodiment of the spraying arrangement for the liquid is shown in figs. 1 and 2, in which the rotor comprises a hollow cylindrical core, which in combination with angled plates in the total length forms collecting chambers for the liquid to be sprayed. The purpose of the leading portion in the rotational direction of the angled plate is in a first step to collect the liquid. Thereafter, when the liquid in the collecting chamber has obtained the speed of rotation of the rotor, it is sprayed under the centrifugal force from the edge of the leading portion. From here the liquid is thrown at a speed, which is the sum of the peripheral speed of the rotor and the flow from the edge of the collecting chamber.

The feeding of liquid to the rotor takes place through a slot between two baffles extending in the total length of the tunnel. The sprayed liquid is thrown against the preferably cylindrical wall of the tunnel and flows back to the bottom of the tunnel along its sides for a repeated spraying by the rotor. The baffles are shaped in such a way that the interspace between the baffles and the bottom of the tunnel provides a high speed of the flow from both sides of the slot in order to obtain a turbulent flow, which is able to keep impurities in the liquid in suspension.

If for instance the apparatus is to be used for rectification of a mixture of liquids with different boiling points, where calculations show that 30 theoretical bottoms are required in order to obtain the desired separation, the liquid has to be sprayed 45 times provided that the efficiency of the contact between the sprayed liquid and the vapour is 66,6%, while it is flowing from inlet to outlet for the treated liquid. Provided that the effective length of the tunnel for example is 2,8 m, the average movement of the liquid will amount to 2800 / 45 = 62 mm in the direction of the outlet between subsequent spraying steps. The process vapour entering the tunnel through the end at the outlet for the liquid is flowing in countercurrent with respect to the liquid in the longitudinal direction of the tunnel. During the passage of the vapour through the tunnel it will collect the more easily evaporable component from the liquid and some of the vapour will be absorbed in the liquid.

If the rotor is rotating with a speed of 600 rpm and it comprises 4 collecting chambers on its circumference, 40 jets of liquid will be thrown out per sec., and if the vapour is flowing through the free cross-section of the tunnel with a speed of 1 m/sec., the vapour will get in contact with a jet of liquid with a slightly different composition for each 25 mm the vapour is moving in the forward direction. The flow of the vapour therefore makes it possible to obtain a close equilibrium between the liquid and the vapour phase during the continuous flow through the subsequent contact steps.

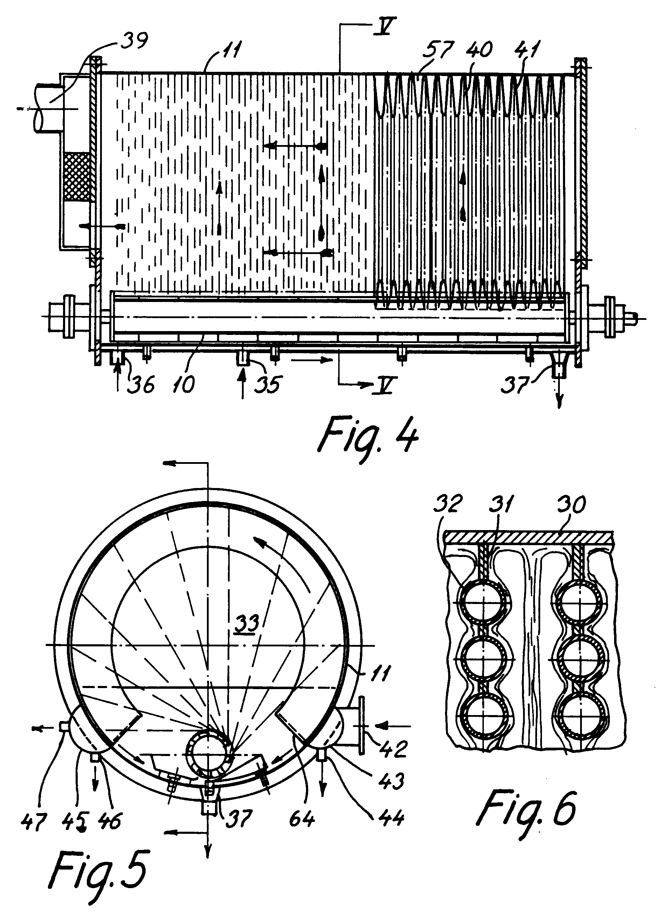

The embodiment comprising a tunnel with smooth internal walls and a spraying system, in which the liquid is constantly in a turbulent flow, forms the basis for the use of the system for treating highly polluted liquids, and pilot tests with an apparatus as shown in figs. 4 and 5 have shown that the apparatus is able to operate for several days between cleaning, whereas with conventional equipment, such as columns with a number of bottoms or other types of contacting systems, the separation has been impossible partly on account of clogging and partly on account foaming.

In stripping or rectification of impure liquids it is desired that a simultaneous concentration of the impurities be obtained in the residual portion of the liquid, which is obtained by using vapour produced by evaporation of a fraction of the impure liquid.

Evaporators of conventional type are not well suited for performing such an evaporation, as both in case of evaporators of circulation-type or downflow-type a strong recirculation of the liquid in the evaporator is essential, and the complete heat transmission surface will therefore produce vapour from a liquid comprising the high final concentration of impurities, the consequence of which is a reduced heat transmission.

The solution of this problem is that a portion of the walls of the tunnel is constructed as a heat transmission surface designed as a bellow-arrangement comprising welded conical rings, which are welded in turn at their inner and outer circumference or as a surface with longitudinal corrugations. It has turned out in pilot tests that the design has a number of advantages:

1. The liquid is moving stepwise forwards against the outlet and is at the same time thrown a number of times against the heat transmission surface. The first portion of this surface, therefore, will meet a liquid with a content of solids corresponding to the content of impurities in the feed, and only the last portion will meet the end concentration of impurities. The average heat transmission coefficient will therefore be better than that of conventional types of evaporators.

2. The complete surface of the heat transmission elements is sprayed by the liquid, and thereby the surface is kept clean through long periods of operation.

3. As the liquid, while it is being thrown from the rotor to the heat transmission surface, is in contact with the vapour created, in particular the portion of the evaportor situated close to the stripping section will also act as a "stripping column". In case of liquids, in which the difference between the content of solids at the outlet and the inlet is large, this effect will be so pronounced that a stripping section can be omitted, and the complete separation and concentration may be performed solely by means of the evaporating section.

4. In case of liquids, which are normally difficult to evaporate owing to foaming, this evaporator is advantageous in that the heat transmission surface is constantly receiving a rain of droplets beating down an initial foaming.

In connection with liquids containing solids which are less apt to stick to the surfaces and which form deposits, the evaporator may be designed as a heat transmission surface comprising a battery of tubes. The tubes are arranged in panels of horisontal tubes placed in close relationship in a plane perpendicular to the axis of the spraying rotor. The tube panels are arranged at a mutual distance corresponding to the distance between the jets thrown out from the specially designed spraying rotor, which is adapted to eject jets of liquid into the interspace between the panels. When the jets hit the wall of the tunnel above the panels, the liquid is dispersed and trickles over the tubes. The heating medium is circulated inside the tubes.

The advantage of this embodiment is that it is possible to establish a very large heat transmission surface in a single unit and that considerably bigger differential pressures may be used between the heat transmsision medium and the inside of the tunnel, which makes such an apparatus especially suited for being incorporated in a rectification plant, in which a mechanical heat pump is included, among others because the resistance to flow of the vapour through the rectification section is extremely low. As is the case with the evaporator arranged as a bellow or with a corrugated surface, this embodiment provides a stepwise flow of liquid towards the outlet, and the first section of the evaporator therefore meets a liquid with a content of solids corresponding to the content in the feed, and consequently, the avearage heat transmission coefficient will be high.

The stripping effect is less pronounced, as importance is attached to the liquid being sprayed in jets passing between the tube panels with such a force that the liquid, when hitting the wall, is dispersed over the tube panels via separating means.

The combination of a spraying system and a heat transmission surface of the bellow-type may be adapted to act simultaneously as an economizer and a waste gas washer, and in case of small outputs, such a system may also function as a central heating boiler. An advantage of a boiler unit/economizer of this type is obtained especially if the return flow of water has a low temperature, as most of the higher heating value of the fuel may be utilized.

The passage of the boiler water through the bellows is arranged in such a way that the boiler water is moving stepwise in countercurrent with the flue gas. The liquid sprayed in the tunnel will get in contact with the hot flue gas at its inlet into the economizer/boiler and part of the liquid will evaporate. The vapour produced will together with the flue gas continue its flow through the economizer and will gradually condensate, as the flue gas gets in contact with colder sections of the heat transmission surface. A small amount of liquid containing chemicals for neutralizing the flue gas is added to the liquid, and this liquid will together with condensate from the combustion be removed through an outlet at the inlet for flue gas together with the impurities absorbed. The removal of impurities will be enhanced by means of said evaporation and condensation of part of the washing liquid, as the flow of condensate in the direction towards the flue gas inlet will contribute to transporting the impurities in the direction of the overflow system.

The term "spraying" rotor is used irregardless of the fact whether the rotor throws out the liquid in form of larger or smaller droplets. As the blades of the rotor collect the liquid entering through the slot between the two baffles, the atomization or jet force desired can be obtained by choosing a suitable speed of rotation. At a low speed of rotation and a high feed of liquid large droplets are obtained, while at high speed of rotation and a small flow of liquid an atomization of the liquid is obtained. These are the outer limits for the spraying system.

The invention is further described in detail in the following description with reference to the drawing, in which:
Fig. 1 shows a cross-section of a tunnel comprising a spraying rotor and a feeding system arranged at the bottom of the tunnel,
fig. 2 is a longitudinal section of the tunnel according to fig. 1 adapted to stripping/rectification with a flow of vapour,
fig. 3 is a detail showing a channel for the return of the liquid,
fig. 4 is a longitudinal section in a tunnel adapted for stripping/rectification and comprising an integral heat transmission surface of bellow-type for evaporation of vapour required in the process,
fig. 5 is a cross-section of the apparatus according to fig. 4,
fig. 6 shows an illustration of the distribution of liquid over the tube pannels at a larger scale,
fig. 7 is a section in a heat transmission surface at a larger scale,
fig. 8 is a longitudinal section in a special rotor for circulation of liquid in connection with tube panels,
fig. 9 is a section through the rotor according to fig. 8,
fig. 10 is a longitudinal section through a combined evaporation and rectification plant with tube panels,
fig. 11 is a cross-section through the plant according to fig. 10,
fig. 12 is a longitudinal section in a combined flue gas washer and central heating boiler,
fig. 13 is a cross-section through the boiler according to fig. 12.

Fig. 1 shows the preferred spraying system consisting of two baffles 20a and 20b and the rotor 10. The liquid flows towards the rotor through the slot 21 between the two baffles, in which slot the speed of flow suitably is between 1 and 1.5 m/sec. The peripheral speed of the rotor should be adapted to the purpose and to the cross-section of the tunnel and is approx. 10 m/sec. The angled plate 13, which is welded to the tubular core 12 and supported by connecting lugs 14, forms together with the wall of the core bottoms and walls in collecting chambers 15. The leading edge of the angular plate at the same time serves as a shovel for collection of liquid and further as guide for discharge of the collected liquid during the further rotation of the rotor. The rotor is driven either by a directly coupled motor 57 or by means of (not shown) V-belts.

If the angle between the inside of the leading edge of the angular plate and the circumscribed cylinder is less than 30°, all the liquid, which has flowed through the slot 21 between the passages of two consecutive collecting chambers, will be collected at the bottom of the collecting chamber. During the filling up of the collecting chamber the collected liquid is accelerated to the rotational speed of the rotor and is then thrown against the wall 11 of the tunnel or against a heat transmission surface 40, thereafter returning towards the bottom for a renewed spraying. In order to obtain a high efficiency in the contact between liquid and gas, an entire covering of the cross-sectional area is aimed at by means of a fan of sprayed liquid, which is achieved if the spraying takes place over an angular range of 180°. A suitable distribution of the sprayed liquid may be obtained by adapting the volume of the collecting chambers to the collected volume of liquid and by adjusting the inclination of the outer wall to a suitable value, possibly combined with a partial curvature of said wall. When concentrating highly polluted liquids it may be advantageous to adapt the collecting chambers in such a way that half of the chambers spray a first portion of the heating surface and other chambers spray the remaining portion of the heating surface. By these means larger droplets with higher impact are obtained, the energy consumption being thereby reduced under retension of the same purification effect.

When the system is used for rectification of mixtures of liquids, an elongate tunnel will normally be required in order to obtain a large number of theoretical bottoms. In such case the rigidity of the rotor will be a limiting factor, as the forces for accelerating the collected liquid volume to full rotational speed when hitting the bottom of the collecting chamber will be comparatively big.

The rigidity may be increased and the force reduced by arranging blades 16 for collecting liquid between consecutive collecting chambers shown in fig. 1 on the right side of the rotor. Thereby, the liquid is collected in twice as many portions of half the size, of which portions those collected by the shovels will be accelerated both in the direction towards the axis of the rotor and in its rotational direction. This has the effect that the liquid volume collected by the shovels (after passage over the rear edge) moves slowly in a forward direction with respect to the inlet zone 21. When a following collecting chamber has collected and accelerated its volume of liquid to the rotational speed, it will collect and accelerate the volume collected by the shovel to the rotational speed. Each collecting chamber will therefore throw out the same volume of liquid both with and without the supplementary shovels, but the force acting on the rotor will be reduced by half.

The baffles 20a og 20b are adapted to conduct the liquid back to the rotor in the most advantageous way, i.e. when it is a question of liquids with suspended impurities or precipitate in order to obtain a flow towards the slot 21 with a flow rate sufficiently high to keep the solids in suspension in order to enable these solids to be removed together with the residue. At the same time it is of importance to obtain a continuous countercurrent between liquid and vapour without mixing of the liquid in axial direction of the tunnel during the flow towards the inlet to the rotor. Both of these requirements are met if the baffles have a common center of curvature as the bottom of the tunnel, and if the distance between the bottom and the baffles provides a suitable cross-section of the flow.

The baffles should have a size sufficient for securing that the liquid flowing along the walls of the tunnel is flowing through the interspace only and in such a way that a static height of 100 mm may be obtained.

Especially when a partial evaporation is aimed at, an increased viscosity of the liquid may occur, and in order to obtain the most advantageous spraying all over the length of the tunnel, it is necessary that the width of the slot 21 is adjustable, which is obtained by mounting the baffle 20a in front of the slot seen in the rotational direction of the rotor through slots in the baffle by means of the bolts 22a. A minor part will, however, hit the inside of the adjustable baffle, which therefore is provided with an upward curvature 27 in order to direct the liquid from the inside of the baffle to flow into the rotor parallel with the flow in the inlet slot 21.

The baffle 20b behind the slot is mounted in a fixed position by means of the bolts 22b. It has double walls, the upper edge of the wall facing the rotor being at least 100 mm above the inlet slot and should be close to the initial jets of spray following a straight line. The surface 29 should have a moderate extension in the direction of the jets in order to enable droplets hitting the surface to continue up to its edge by their own inertia. The first portion of the double-walled baffle 20b,29 is part of a cylinder, which is coaxial with the rotor in a distance of approx. 5 mm from the rotor and a planar portion continuing as a tangent to the cylindrical portion at angle of 30° to the horizontal plane. Various form of rotating atomizers are known, for example smooth cylinders, cylindrical brushes or a greater or smaller number of discs on a common axis, said rotors being partiallly submerged in the liquid. They are used in connection with air washers or applicators for drum dryers. A drawback of these systems is that the the liquid to be atomized is picked up by the rotor by adhesion, but as the impurities have an adhesion different from that of the liquid, a sedimentation of the impurities will take place. In certain cases the adhesion is improved by introduction of a mechanical stirring, for example by means of propellers. Thereby, the continuous countercurrent effect, which is aimed at by the present invention, cannot be obtained.

Various conditions may influence the axial flow of the liquid through the tunnel. The flow is created by a lower liquid level at the outlet than at the inlet, and changes in liquid flow and viscosity may for example cause a change of the liquid level through the apparatus, which, however, in the present system has a limited effect owing to the general design comprising baffles.

The speed of flow in the slot 21 between the two baffles can be deduced from the formula $V = \sqrt{2g \times h}$, in which h is the vertical distance from the centre of the slot to the liquid level in the interspaces between the bottom of the tunnel and the outer face of the baffles, and g is the acceleration due to gravity. It is seen that a reduction of the liquid column by 25% will only cause a change of the speed of $\sqrt{0.75} = 0.866$, i.e. a reduction of the circulated amount of liquid of 13.4%. If necessary, a compensation for this change may be provided by adjusting the width of the slot between the two baffles.

Fig. 2 shows a longitudinal section in a tunnel, which may be used for stripping or rectification of the more easily evaporated portion of a mixture of liquids by means of a flow of vapour or as washer for air or gases. The process vapour or gas is introduced into the tunnel through a gas inlet 38 in the end cover, and the gas or vapour exits through the outlet 39 in the opposite end cover. The vapour is conducted to a not shown condenser. If used for rectification of mixtures of liquid the feed enters through an inlet 35 in an adequate distance from the vapour outlet 39, while the reflux is introduced through a tube 36 close to the vapour outlet. The residue or the polluted washing liquid is removed through a liquid outlet 37.

When the diameter of the tunnel is smaller, the liquid hitting the upper surface of the wall 11 of the tunnel flows back to the spraying system 10 along the tunnel wall at both sides, the intensive spraying preventing the liquid from the upper, substantially horizontal wall section from falling directly down into the spraying system. In tunnels having a larger diameter, the substantially horizontal upper wall has a larger extension, and the liquid therefore has a tendency of falling directly into the spraying system, which is disadvantageous, as the droplets start their fall at zero speed and the fall is slowed down by the influence from the jets, which are thrown upwards by the rotor. The vapour flow, therefore, provides a drift on the droplets and thereby causes a mixture and disturbance of the regularity in the countercurrent.

As shown in fig. 2 this may be prevented by welding conical, axially spaced rings 18 to the upper half of the tunnel. A planar ring 19 with the same internal diameter as the internal diameter of the conical ring and an outer diameter, which is 20 mm smaller than the internal diameter of the tunnel, is welded to the conical ring providing a V-shaped gutter. The arrangement is shown at a larger scale in fig. 3.

The effect is that liquid hitting the conical surface of the ring is forced to flow outwards and forwards against the interspace between the adjacent conical and planar rings, whereby the liquid enters into the V-shaped gutter and is thereby conducted to the spraying device without drifting due to free contact with the vapour flow.

The same principal construction of the apparatus as shown in fig. 2 may also be used as a "cooling tower" for cooling of water, enabling cooling of the water to a temperature close to wet temperature of the cooling air in an elongate tunnel. The apparatus should be provided with a ventilator, which either sucks or blows the cooling air through the tunnel.

Figs. 4 and 5 show an embodiment, in which the tunnel or process chamber is designed as a rectification apparatus incorporating an evaporator of the bellow-type, i.e. with a heat transmission surface constructed from conical plate rings welded together, where the rings 41 are alternately facing each other or having their backs turned to each other, thereby forming V-shaped annular pockets alternately facing the internal space of the tunnel and the chamber wall, thereby forming channels 57 for the heating medium. Due to the fact that the spraying system occupies space at the bottom of the tunnel, the plate rings cover only 270° of the circumference of the tunnel and the outwards facing folds are closed at their ends by means of plates 64 connecting the heat transmission to the tunnel wall. Furthermore, the first and the last plate is welded to the tunnel wall along its total circumference. The heating medium - preferably steam with a suitable temperature and pressure - is introduced through a steam inlet 42 to the manifold 43 which is welded to the wall of the tunnel, through which the steam passes through holes into the pockets 57 of the heat transmission surface, on which a substantial portion of the steam is condensated, while the remaining portion exits together with possible air through the manifold 45, from which possible air is removed through an outlet 47 and condensate is removed through drains 44 and 46.

Provided that the volume of the heating steam is small compared to the cross-sectional area of the total number of folds, the two manifolds may simultaneously serve as reversing chambers.

The internal surfaces 40 of the pockets are heavily sprayed by the liquid, which after concentration at the outlet 37 for residue will contain minimal amounts of the easily evaporable component.

This evaporation system is particularly advantageous for treatment of highly polluted mixtures of liquid, as the liquid having passed the stripping section still will have nearly the same percentual content of impurities as the feed at the inlet to the apparatus (lower at a large percentage of reflux). The concentration of impurities is gradually increasing, as the liquid reaches the outlet 37, while being repeatedly sprayed against the heating surface and partly evaporated, and it is therefore only a small portion of the heat transmission surface that meets the final concentration, and as the heavy spraying of the heat transmission surface flushes off deposits, a very high average heat transmission coefficient is obtained with this design. Considering further that the first section of the evaporator simultaneously will contribute to the stripping, if the liquid, when it reaches the evaporator, has not been completely stripped, the design provides a large security against undesired discharges of for example organic solvents. The vapour coming from the evaporation section will flow through the stripping section towards the vapour exit, while it is being exchanged with the liquid introduced through the inlet 35, the reflux from which exits through 36.

If there is only a need for stripping without concentration of the easily evaporable component of a mixture, and a need for a strong concentration of impurities the process may be performed without a proper stripping section, i.e. the tunnel may have a heat transmission surface extending in the full length of the tunnel and still provide a certain stripping effect. In this embodiment the apparatus is also suited for concentration purposes.

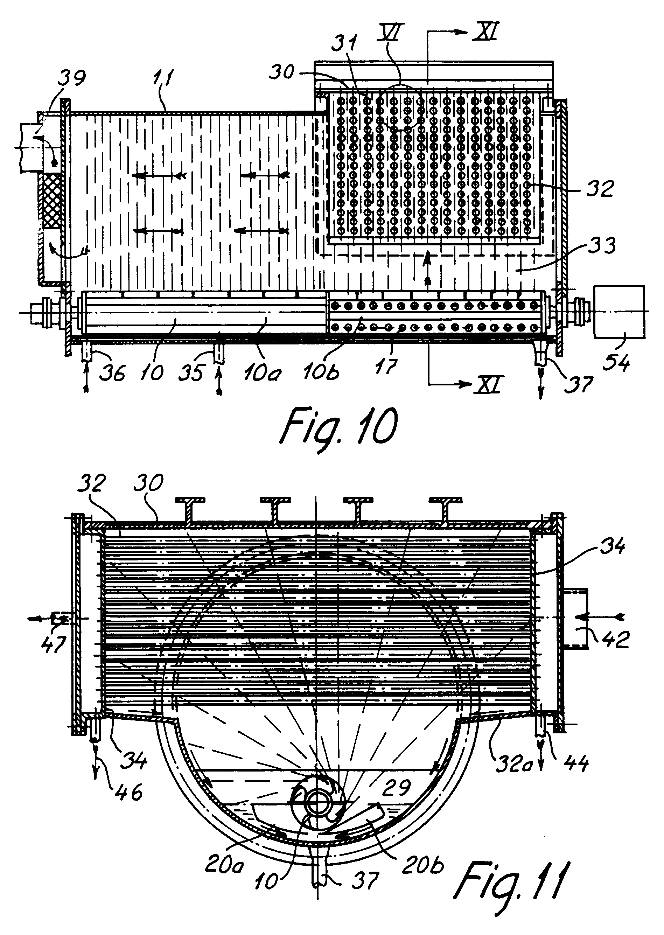

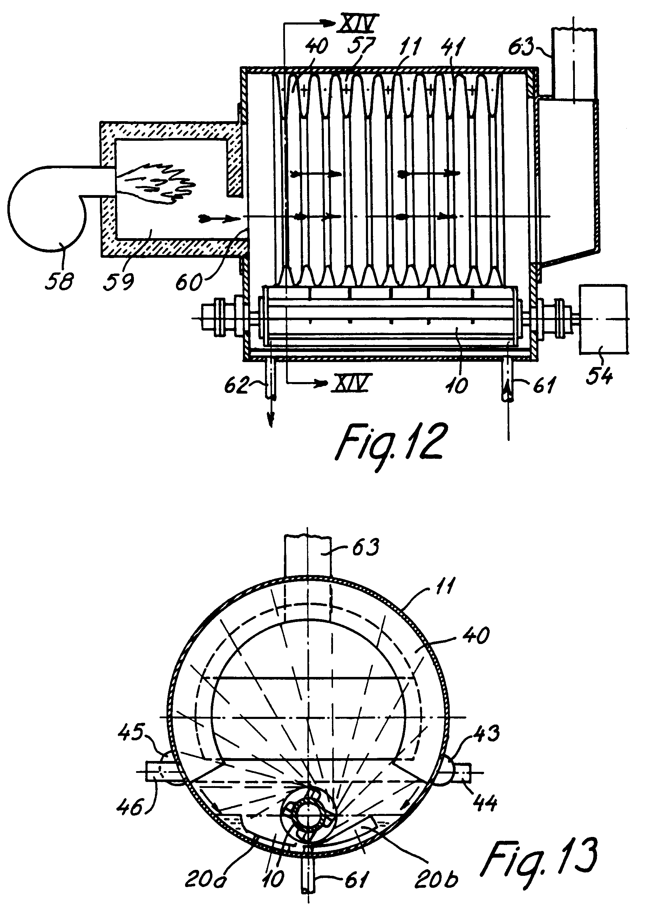

Figs. 10 and 11 show a rectification apparatus with an integrated evaporator, the heat transmission surface of which consists of tubes. In the evaporator section of the apparatus the tunnel has a transversal extension 32a, in which the tubes forming the heat transmission surfaces are arranged in tube panels 32 with horizontal tubes placed vertically over each other and perpendicular to the axis of the spraying rotor. The tube panels are placed with an interspace between the panels in order to enable the liquid sprayed in jets from the spraying system to pass between the panels and by hitting the top cover 30 to spread out to the sides and trickle over the tubes 32.

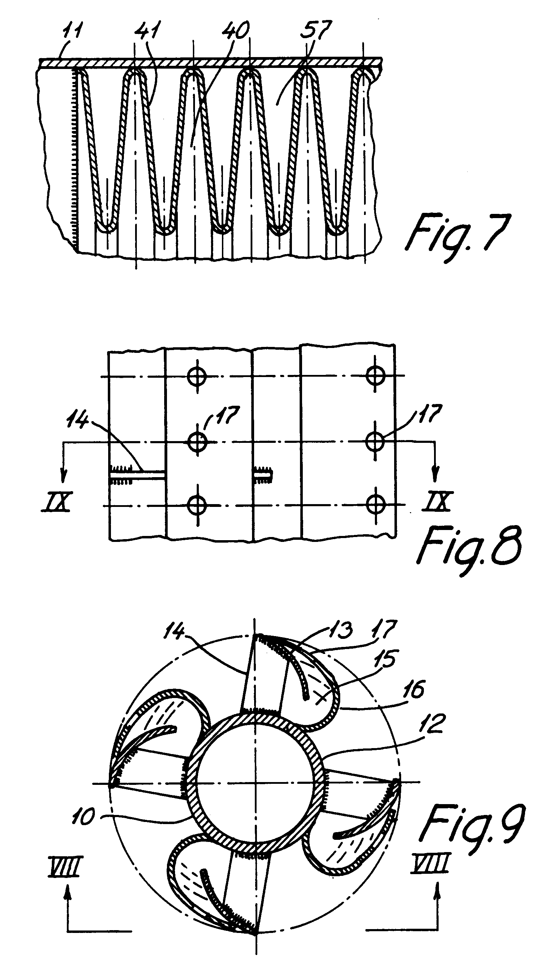

In order to obtain an effective impact of the jets from the spraying system, the rotor is designed as shown in figs. 8 and 9, the curved and forwardly directed shovel 13, which is fastened to the core of the rotor by means of connecting plates 14 serving only to collect the liquid and to conduct it to the collecting chamber 15, which is delimited by a curved outer wall 16, the cylindrical core 12 and the rear face of the shovel blades.

The ejection of the liquid takes place through holes 17 in the outer walls 16, said holes being arranged as close as possible to the connection between the outer wall and the shovel 13. The holes are situated opposite the centre of the interspaces between the tube panels. Thereby, a concentrated jet with high impact may be thrown against the cover 30. Fig. 6 shows how the liquid by hitting the cover 30 is escaping at the sides against the flow control means 31 and from there it trickles down the tubes 32. The baffles 20a og 20b have the same function as described in connection with fig. 1.

The heating medium flowing through the tubes is distributed by means of manifolds and reversing chambers constructed in connection with the tube plates 34. The spraying rotor 10a in the stripping/rectification section is designed according to the system in fig. 1 and fig. 2 and is connecte with the rotor 10b at the transition to the evaporator section. This embodiment comprising heat transmission surfaces constructed as tube panels also provides the advantage that the liquid moves evenly forward against the outlet for residue giving off vapour in such a way that only the last tube panels meet a high concentration of impurities. Due to the fact that liquid in this type of evaporator is sprayed in concentrated jets, the conctact between the vapour face and liquid is less effective and the stripping effect is less pronounced than that of the bellow design, in which an axially coherent liquid jet is used. The stripping/rectification section generally functions as described in connection with evaporators of bellow construction. Where there is no need for a simultaneous stripping or rectification, the apparatus may be designed with tube panels and may advantageously be used for direct concentration, as a good heat transmission is obtained in consequence of the gradually increasing concentration of impurities.

The heat transmission surface 40 shown in figs. 4, 5 and 7 may alternatively constructed by corrugation of plates, which are welded together to form a coherent heat transmission surface. By the corrugation pockets are provided, said pockets alternately facing upwards towards the heat transmission medium and downwards towards the liquid, which is to be heated or evaporated. The pockets with openings facing downwards are closed at the ends by means of V-shaped plates 64 adapted to the cross-section of the pockets, and these plates are welded to the lower part of the apparatus, which part is shaped preferably like the half of a cylinder. The centre plane of the pockets is perpendicular to the axis of the spraying rotor like each of the tube panels 32 in figs. 10 and 11, the liquid sprayed from the rotor hitting both faces of the pockets.

The pockets facing upwards form together with an upper cover transversal channels, in which the heating medium - preferably steam - is introduced through the inlet manifold 43, fig.5, at the upper end of the channel, while outlet of air and condensate takes place at the opposite end of the channels from the outlet manifold 45.

Is the amount of steam small compared to the total cross-sectional area of the channels, then the two manifolds 43 and 45 may partly serve as reversing chambers for the steam, which thereby to and fro passes a number of channels in order to obtain a suitable flow rate through the channels.

The cross-section of the pockets facing the product is adapted in such a way to the liquid to be heated or concentrated that in case of extremely polluted liquids with a tendency of forming deposits, the cross-section is to be designed with a big angle and with a big radius of curvature at the bottom of the pocket.

Compared with the bellow type design according to figs. 4, 5 and 7 the above design provides the same characteristics comprising a continuous countercurrent between liquid and vapour and a direct spraying of the total heat transmission surface. The heat transmission surface, however, is more economic in construction, as the weldings are shorter and more accessible and the forming of the heat transmission surface is simpler to carry out and less material is wasted. The capacity of this construction, however, is smaller for a single unit.

The embodiment according to figs. 1 and 2 may according to the invention be used as a flue gas washer. In an embodiment, in which the tunnel in its axial extension is provided with a heat transmission surface, the additional advantage, that the apparatus also acts as an economizer, is obtained. For small outputs the system may be used as a combined central heating boiler and flue gas washer as shown in figs. 12 and 13. In the embodiment shown the peripheral wall 11 of the boiler is provided with a heat transmission surface 41 of the bellow type, the outwards facing pockets 57 of which form channels for the water, which enters through an inlet manifold 43 and exits through the outlet 46.

The burner 58 has a combustion chamber 59, from which the hot combustion gas is introduced into the boiler through an inlet 60. The washing liquid, which further acts as a heat transmission medium, is spread and recirculated by means of a spraying system as shown in figs. 1 and 2 with a spraying rotor 10 and baffles 20a and 20b arranged in a suitable distance from the bottom of the boiler. The washing liquid is introduced through an inlet 61 and exits through an outlet 62. During the passage from the inlet to the outlet the washing liquid is several times spread across the flow of flue gas providing an effective contact therewith for transmission of solids and heat. When the washing liquid hits the heat transmission surface 40, the heat is transferred to the boiler water.

The boiler water flows stepwise from the inlet 44 to the outlet 46, flowing from the inlet 44 to a reversing chamber in the manifold 45 through the first of the pockets 57 and returning from there to the reversing chamber in the manifold 43 through the next of the pockets 57, etc., towards the outlet 46, the desired countercurrent with the flue gas being thus obtained and the flue gas after emission of heat and impurities being conducted to a funnel through the flue gas exit 63. The spraying rotor is driven either by a V-belt transmission or as shown directly by a motor 54.

## Claims

1. An apparatus for separating mixtures of liquid and/or gaseous fluids for concentration and/or removal of impurities in a gaseous or liquid fluid, said apparatus comprising an elongate and substantially horizontal chamber or tunnel having axially spaced fluid inlets and outlets (35-39), and a spraying system (10, 20a, 20b) arranged within the chamber in the axial direction thereof for throwing the liquid against the inner walls (11) of the chamber, or against the heating elements (32, 40) integrated in said walls, the liquid returning along the walls of the chamber for repeated spraying, characterized in that the spraying system (10, 20a, 20b) comprises a rotor (10) with collecting chambers (15) having an aperture in the direction of rotation of the rotor, the collecting chambers comprising an outer wall (13), the angle of which with respect to a tangent of the periphery of the rotor is less than 30°, the rotor (10) being arranged above and adjacent to a narrow slot (21) defined between two baffles or guide plates arranged in a close relationship with the lower portion of the chamber to form two channels, through which the liquid is directed at a high flow rate obtaining a turbulent flow to the spraying rotor (10) via the narrow slot (21).

2. An apparatus according to claim 1, wherein a heating element (40) of the bellow type is incorporated in the wall (11) of the chamber along at least a part of its axial length.

3. An apparatus according to claim 1, wherein a heating element comprising a battery of transversely and horizontally extending tubes (32) is arranged along at least part of the length of the chamber.

4. An apparatus according to any of the claims 1-3, wherein the spraying rotor (10) is adapted to throw compact jets of liquid against the top wall (30) above the battery of tubes (32) and between the tubes (32), the liquid flowing back along the tubes when returning to the spraying rotor (10).

5. An apparatus according to claim 1 or 2, wherein the heating surface is formed by folded plating, which is sprayed on one side and which defines passages for a heating medium on the other side.

6. An apparatus according to claim 1 or 2, wherein the inner wall of the chamber defines V-shaped channels (18, 19) to direct the return flow of liquid along the inside of the chamber wall (11) in order to prevent drift of the liquid due to dripping.

7. A method of operating an apparatus according to claim 1, said method comprising passing a flow of gas through the chamber or tunnel, introducing a liquid through a liquid inlet (36) at one end and removing liquid through a liquid outlet (37) at the other end of the chamber, and rotating the rotor (10) so as to bring the liquid effectively into contact with the gas several consecutive times by being sprayed against the walls (11) of the chamber, liquid being returned to the rotor through said channels and thereby being directed to the slot (21) below the rotor at a high flow rate obtaining a turbulent flow.

8. A method according to claim 7, wherein the gas is caused to flow countercurrently with respect to the flow of liquid between the liquid inlet (36) and outlet (37).

9. A method according to claim 7 or 8, wherein gas in the gas flow is produced by evaporation of part of the liquid by spraying part of the liquid against a heat transmission surface forming an integral part of the chamber.

**Patentansprüche**

1. Vorrichtung zur Scheidung von Mischungen flüssiger und/oder gasförmiger Stoffe zur Konzentration und/oder zur Abtrennung von Verunreinigungen in einem Gas oder einer Flüssigkeit, wobei die Vorrichtung eine gestreckte, im wesentlichen horizontale Kammer oder einen Tunnel mit axial beabstandeten Einlässen und Auslässen (35-39) für die Stoffe sowie ein Sprühsystem (10, 20a, 20b) innerhalb der Kammer in ihrer axialen Richtung enthält, das den Stoff gegen die inneren Wandungen (11) der Kammer oder gegen in die Wandungen integrierte Heizelemente (32, 40) schleudert, wobei der Stoff längs der Wandungen der Kammer zum erneuten Versprühen zurückgeführt wird, **dadurch gekennzeichnet,** daß das Sprühsystem (10, 20a, 20b) einen Rotor (10) mit Sammelkammern (15) umfaßt, der eine Öffnung in der Umdrehungsrichtung des Rotors aufweist, wobei die Sammelkammern eine äußere Wand (13) besitzen, deren Winkel in bezug auf eine Tangente der Rotorperipherie kleiner als 30° ist, und wobei der Rotor (10) oberhalb und nahe eines engen Schlitzes (21) angeordnet ist, der von zwei Leitblechen oder Führungsplatten gebildet wird, die sich nahe des unteren Abschnitts der Kammer befinden und zwei Kanäle bilden, durch welche der Stoff mit hoher Fließgeschwindigkeit unter Erhalt einer turbulenten Strömung zum Sprührotor (10) über den engen Schlitz (21) geführt wird.

2. Vorrichtung nach Anspruch 1, **dadurch gekennzeichnet,** daß in der Wandung (11) der Kammer längs mindestens eines Teils ihrer axialen Länge ein faltenbalgartiges Heizelement (40) angeordnet ist.

3. Vorrichtung nach Anspruch 1, **dadurch gekennzeichnet,** daß wenigstens längs eines Teils der Kammerlänge ein Heizelement, bestehend aus einer Batterie sich transversal und horizontal erstreckender Rohre (32), angeordnet ist.

4. Vorrichtung nach einem der Ansprüche 1-3, **dadurch gekennzeichnet,** daß der Sprührotor (10) dazu ausgelegt ist, kompakte Stoffstrahlen gegen die Deckenwandung (30) oberhalb der Rohrbatterie (32) und zwischen die Rohre (32) zu schleudern, wobei der Stoff bei Rückkehr zum Sprührotor (10) entlang der Rohre zurückfließt.

**5.** Vorrichtung nach Anspruch 1 oder 2, **dadurch gekennzeichnet,** daß die Heizoberfläche durch eine gefaltete Metallage gebildet ist, die von einer Seite besprüht ist und die auf der Rückseite Passagen für ein Heizmedium aufweist.

**6.** Vorrichtung nach Anspruch 1 oder 2, **dadurch gekennzeichnet,** daß die innere Wandung der Kammer V-förmige Kanäle (18, 19) bildet, die den Rückfluß des Stoffes entlang der Innenseite der Kammerwandung (11) führen, um Abwanderung von Stoff durch Tropfen zu vermeiden.

**7.** Verfahren zum Betreiben einer Vorrichtung nach Anspruch 1, **dadurch gekennzeichnet,** daß man einen Gasfluß durch die Kammer oder den Tunnel leitet, eine Flüssigkeit durch einen Flüssigkeitseinlaß (36) an einem Ende einbringt und Flüssigkeit durch einen Flüssigkeitsauslaß (37) am anderen Ende der Kammer abzieht und den Rotor (10) rotiert, um die Flüssigkeit intensiv mit dem Gas zu kontaktieren, indem man sie mehrfach nacheinander gegen die Wandungen (11) der Kammer sprüht, wobei Flüssigkeit unter Erzeugung einer turbulenten Strömung in den Schlitz (21) unterhalb des Rotors mit hoher Fließgeschwindigkeit durch die Kanäle und mit ihrer Hilfe zurückgeführt wird.

**8.** Verfahren nach Anspruch 7, **dadurch gekennzeichnet,** daß das Gas im Gegenstrom zur Richtung der Flüssigkeitsströmung zwischen Flüssigkeitseinlaß (36) und Flüssigkeitsauslaß (37) geführt wird.

**9.** Verfahren nach Anspruch 7 oder 8, **dadurch gekennzeichnet,** daß Gas im Gasstrom durch Verdampfung eines Teils der Flüssigkeit gebildet wird, indem man einen Teil der Flüssigkeit gegen eine Wärmeübertragungsfläche sprüht, die einen integralen Teil der Kammer bildet.

**Revendications**

**1.** Un appareil de séparation de mélanges de fluides liquides et/ou gazeux pour la concentration et/ou l'élimination des impuretés dans un fluide gazeux ou liquide, ledit appareil comprenant une chambre ou un tunnel oblong et sensiblement horizontal, muni d'entrées et de sorties (35 à 39) de fluide axialement espacées, et un système de pulvérisation (10, 20a, 20b) agencé à l'intérieur de la chambre dans la direction axiale de cette dernière pour projeter le liquide contre les parois intérieures (11) de la chambre, ou contre les éléments chauffants (32, 40) intégrés dans lesdites parois, le liquide revenant le long des parois de la chambre pour subir une pulvérisation répétée, caractérisé en ce que le système de pulvérisation (10, 20a, 20b) comporte un rotor (10) avec des chambres collectrices (15) présentant une ouverture dans le sens de rotation du rotor, les chambres collectrices comprenant une paroi extérieure (13), dont l'angle, avec une tangente à la périphérie du rotor, est inférieur à 30 degrés, le rotor (10) étant disposé au-dessus et adjacent à une fente étroite (21) définie entre deux déflecteurs ou plaques de guidage agencées en relation étroite avec la partie inférieure de la chambre pour former deux canaux, à travers lesquels le liquide est envoyé à grand débit, conduisant à un écoulement turbulent vers le rotor de pulvérisation (10) via la fente étroite (21).

**2.** Un appareil selon la revendication 1, dans lequel un élément chauffant (40) du type soufflet est incorporé dans la paroi (11) de la chambre le long d'au moins une partie de sa longueur dans la direction axiale.

**3.** Un appareil selon la revendication 1, dans lequel un élément chauffant comprenant une batterie de tubes (32) s'étendant transversalement et horizontalement est disposé le long d'au moins une partie de la longueur de la chambre.

**4.** Un appareil selon l'une quelconque des revendications 1 à 3, dans lequel le rotor de pulvérisation (10) est susceptible de projeter des jets compacts de liquide contre la paroi supérieure (30) au-dessus de la batterie de tubes (32) et entre les tubes (32), le liquide s'écoulant le long des tubes lorsqu'il revient au rotor de pulvérisation (10).

**5.** Un appareil selon la revendication 1 ou 2, dans lequel la surface chauffante est formée par des plaques repliées, qui reçoivent une pulvérisation sur une face et qui définissent des passages pour un fluide de chauffage sur l'autre face.

**6.** Un appareil selon la revendication 1 ou 2, dans lequel la paroi intérieure de la chambre définit des canaux en forme de V (18, 19) pour diriger l'écoulement en retour du liquide le long de l'intérieur de la paroi de la chambre (11) afin d'empêcher la dérive du liquide due à l'égouttage.

7. Un procédé pour faire fonctionner un appareil selon la revendication 1, ledit procédé comprenant les étapes consistant à faire passer un écoulement de gaz à travers la chambre ou tunnel, à introduire un liquide à travers une entrée de liquide (36) à une extrémité de la chambre et à évacuer le liquide à travers une sortie de liquide (37) à l'autre extrémité de la chambre, et à faire tourner le rotor (10) de façon à amener le liquide effectivement en contact avec le gaz plusieurs fois consécutives, en le pulvérisant contre les parois (11) de la chambre, le liquide étant retourné au rotor à travers lesdits canaux de manière à être dirigé vers la fente (21) en-dessous du rotor à un débit élevé permettant d'obtenir un écoulement turbulent.

8. Un procédé selon la revendication 7, dans lequel le gaz est obligé de s'écouler à contre-courant par rapport à l'écoulement de liquide entre l'entrée de liquide (36) et la sortie de liquide (37).

9. Un procédé selon la revendication 7 ou 8, dans lequel le gaz dans l'écoulement gazeux est produit par évaporation d'une partie du liquide en pulvérisant une partie du liquide contre une surface de transmission de chaleur formant une partie monobloc de la chambre.

Fig.3

Fig.1

Fig.2

Fig. 4

Fig.5

Fig.6

*Fig.7*

*Fig.8*

*Fig.9*

15

Fig. 10

Fig. 11

Fig.12

Fig.13